# EUROPÄISCHE PATENTSCHRIFT

(11) **EP 1 075 395 B1**
(45) Veröffentlichungstag und Bekanntmachung des Hinweises auf die Patenterteilung: **24.05.2006**
(21) Anmeldenummer: 99917895.7
(22) Anmeldetag: 27.03.1999
(51) Int. Cl.: B60K 15/077

(54) **KRAFTSTOFFBEHÄLTER**
FUEL TANK
RESERVOIR DE CARBURANT

(30) Priorität: 29.04.1998 DE 19819117
(43) Veröffentlichungstag der Anmeldung: 14.02.2001
(73) Patentinhaber: SIEMENS AKTIENGESELLSCHAFT, 80333 München (DE)
(72) Erfinder: MEYER, Knut, D-45239 Essen (DE)
(86) Internationale Anmeldenummer: PCT/EP1999/002121
(87) Internationale Veröffentlichungsnummer: WO 1999/055550

(56) Entgegenhaltungen:
- DE-A- 4 123 367
- DE-A- 4 426 035
- DE-A- 19 544 577

## Beschreibung

Die Erfindung betrifft einen Kraftstoffbehälter gemäß Oberbegriff von Anspruch 1. Eine derartiger Kraftstoffbehälter ist durch die DE-A1-44 26 035 bekannt.

Saugstrahlpumpen der vorstehenden Art werden derzeit in Kraftstoffbehältern heutiger Kraftfahrzeuge eingebaut und sind deshalb bekannt. Sie dienen dazu, aus einer Kammer des Kraftstoffbehälters Kraftstoff über eine Förderleitung in eine zweite Kammer zu fördern. Üblicherweise ist als Förderleitung an der in dem Kraftstoffbehälter angeordneten Saugstrahlpumpe ein Schlauch befestigt, der bis in die zweite Kammer reicht. Als Treibmittel benutzt man häufig für solche Saugstrahlpumpen von einer Einspritzanlage der Brennkraftmaschine über eine Rücklaufleitung zurückfließenden Kraftstoff.

Nachteilig ist es bei den bekannten Saugstrahlpumpen, daß diese mit ihrer Förderleitung und der Kraftstoffördereinheit ein recht sperriges Bauteil bilden, was sich bei einer Montage in einem Kraftstoffbehälter nachteilig bemerkbar macht.

Weiterhin besitzen die bekannten Saugstrahlpumpen einen Niederhalter, der ein Verrutschen der Saugstrahlpumpe in dem Kraftstoffbehälter verhindert und die Saugstrahlpumpe in ihrer vorbestimmten Position fixiert. Zum Einführen des Niederhalters muß daher zumindest eine weitere Montageöffnung in dem Kraftstoffbehälter vorgesehen werden. Nachteilig wirkt sich bei dieser Öffnung die damit zwangsläufig verbundene, verschlechterte Permeations-Dichtheit und der mit dem Aufsetzen eines Dekkels verbundene zusätzliche Montageaufwand aus.

Man könnte auch daran denken, die Saugstrahlpumpe in den Innenraum des Kraftstoffbehälters einzulegen, ohne diese zu fixieren. Die Saugstrahlpumpe könnte sich dabei unter dem Einfluß des hin- und herschwappenden Kraftstoffes weitgehend frei bewegen, wobei lediglich durch die Förderleitung die Bewegungsfreiheit eingeschränkt wäre. Nachteilig hierbei wirkt sich aus, daß die an der Innenwand des Kraftstoffbehälters entlangrutschende Saugstrahlpumpe auf Dauer die Oberfläche beschädigen kann.

Der Erfindung liegt das Problem zugrunde, einen Kraftstoffbehälter der eingangs genannten Art so zu gestalten, daß die Montage der Saugstrahlpumpe im Inneren des Kraftstoffbehälters möglichst einfach ist. Dabei soll insbesondere auf eine nach dem Stand der Technik zur Fixierung der Saugstrahlpumpe im Kraftstoffbehälter anzuordnende, spezielle Montageöffnung für einen Niederhalter verzichtet werden.

Dieses Problem wird erfindungsgemäß durch die kennzeichnenden Merkmale von Anspruch 1 gelöst daß die Saugstrahlpumpe mittels eines biegeelastischen Tragarmes gegen die Innenwand des Kraftstoffbehälters vorgespannt ist. Diese Gestaltung erlaubt es, die Saugstrahlpumpe bei der Montage mit einem zunächst entspannten, langgestreckten Tragarm problemlos in die zur Montage der Kraftstoffördereinheit vorgesehene Öffnung des Kraftstoffbehälters einzuführen. Anschließend wird der Tragarm im Inneren des Kraftstoffbehälters derart fixiert, daß die Saugstrahlpumpe gegen die Innenwand des Kraftstoffbehälters vorgespannt und damit in ihrer Position fixiert ist. Eine zusätzliche Montageöffnung für einen Niederhalter oder sonstige Fixiermittel ist daher nicht erforderlich.

Dadurch, daß der Tragarm an der Kraftstoffördereinheit fixiert ist, kann er zunächst an der Kraftstoffördereinheit befestigt und anschließend zusammen mit dieser in den Kraftstoffbehälter eingesetzt werden. Durch die Fixierung der Kraftstoffördereinheit im Innenraum des Kraftstoffbehälters wird dabei zugleich auch der Tragarm und die Saugstrahlpumpe fixiert. Hierdurch läßt sich der Montageaufwand reduzieren, wobei durch den Wegfall des Fixiermittels zugleich die Anzahl der erforderlichen Bauteile verringert wird.

Eine andere besonders vorteilhafte Weiterbildung der Erfindung ist dann gegeben, wenn der Tragarm an einem durch die Öffnung für die Kraftstoffördereinheit zugänglichen Abschnitt der Innenwand des Kraftstoffbehälters fixiert ist. Der Tragarm kann dadurch vergleichsweise kurz ausgeführt sein, so daß sich die mittels des Tragarmes übertragbare Vorspannkraft zum Anpressen der Saugstrahlpumpe gegen die Innenwand erhöhen läßt. Hierzu läßt sich der Tragarm beispielsweise mittels einer Clips-Verbindung am Boden des Kraftstoffbehälters fixieren. Die vorzugsweise lösbare Verbindung befindet sich dabei in einem an die Kraftstoffördereinheit angrenzenden Abschnitt des Kraftstoffbehälters.

Eine besonders günstige Weiterbildung der Erfindung läßt sich auch dadurch erreichen, daß der Tragarm mittels eines Fixiermittels vorgespannt ist. Dieses Fixiermittel wird durch die zum Einsetzen der Kraftstoffördereinheit vorgesehene Öffnung in den Innenraum des Kraftstoffbehälters eingeführt und mit dem Tragarm verbunden. Die Fixierung des Tragarmes kann dadurch an zwei unterschiedlichen Lagerstellen erfolgen, so daß sich eine vergleichsweise hohe Anpreßkraft erreichen läßt.

Eine besonders einfache Ausführungsform ist dadurch gegeben, daß das Fixiermittel eine Schwallwand ist. Solche zur Vermeidung von unerwünschten Schwappbewegungen des Kraftstoffes im Inneren des Kraftstoffbehälters häufig verwendeten Schwallwände können dabei zugleich auch zum Vorspannen des Tragarmes verwendet werden. Zusätzliche Spannmittel sind daher nicht erforderlich, so daß der Montageaufwand weiter reduziert werden kann.

Die gegen die Innenwand des Kraftstoffbehälters vorgespannte Saugstrahlpumpe könnte mit einer beispielsweise als Schlauchleitung ausgeführten Förderleitung verbunden sein, wobei die Förderleitung frei durch den Innenraum des Kraftstoffbehälters geführt ist. Besonders vorteilhaft ist demgegenüber eine Ausführungsform der Erfindung, bei der die Förderleitung mit dem Tragarm verbunden ist.

Hierdurch ist die Förderleitung einerseits sicher im Inneren geführt, wobei eine Beschädigung durch andere, im Inneren des Kraftstoffbehälters angeordnete Einbauten vermieden werden kann, andererseits wird dadurch auch die Montage erleichtert, indem der Tragarm zusammen mit der Förderleitung in den Kraftstoffbehälter eingesetzt werden kann.

Dabei ist besonders günstig, wenn die Förderleitung eine Summenstromleitung und eine Treibstromleitung hat. Hierdurch kann die zum Betrieb der Saugstrahlpumpe erforderliche Treibstromleitung zusammen mit der Summenstromleitung am Tragarm montiert werden. Die Querschnitte der Förderleitung und des Tragarmes können in Reihe oder dreieckförmig angeordnet sein. Die Anzahl der vorzumontierenden Bauteile läßt sich dadurch erhöhen, wobei gleichzeitig Fehler bei der Endmontage weitgehend ausgeschlossen sind.

Zum Vorspannen des Tragarmes eignet sich dabei eine Weiterbildung der Erfindung besonders gut, bei der der Tragarm einen biegeelastischen Draht hat. Dieser vorzugsweise aus einem korrosionsgeschützten Material gefertigte Draht kann auf eine gewünschte Vorspannkraft optimal eingestellt werden. Zugleich ist diese Ausführung des Tragarmes kostengünstig in der Herstellung und bei unterschiedlichen Kraftstoffbehälter-Typen mit nur geringfügigen Modifikationen einsetzbar.

Besonders praktisch ist dabei eine Weiterbildung, bei der die Förderleitung mittels einer Clips-Verbindung mit dem Tragarm verbunden ist. Die Saugstrahlpumpe kann dabei zusammen mit der Förderleitung weitgehend vorgefertigt werden und braucht anschließend lediglich mittels der Clips-Verbindung mit dem Tragarm verbunden werden. Hierbei kann beispielsweise auch auf bereits vorhandene Förderleitungen zurückgegriffen werden. Es können auch mehrere Clips-Verbindungen verwendet werden, so daß die Förderleitung lediglich punktuell mit dem Tragarm verbunden ist.

Besonders einfach ist eine andere Ausführungsform der Erfindung gestaltet, bei der der Tragarm als biegeelastische Förderleitung ausgeführt ist. Dadurch kann ein zusätzlicher Draht entfallen. Die Förderleitung dient daher zugleich als Förderleitung und als Tragarm. Weitere Bauteile sind dabei nicht erforderlich.

Besonders vorteilhaft ist auch eine Ausführungsform der Erfindung, bei der der Tragarm im Wesentlichen parallel zu einer Fahrzeuglängsachse ausgerichtet ist. Das Hin- und Herschwappen des Kraftstoffes im Inneren des Kraftstoffbehälters entsteht im Wesentlichen durch das Beschleunigen und Abbremsen des Fahrzeuges. Dadurch entsteht eine zu der Längsachse des Fahrzeuges parallele Strömung. Die Strömungskräfte greifen daher bei dem ebenfalls parallel zur Längsachse angeordneten Tragarm axial an. Der Tragarm kann dadurch wesentlich größere Kräfte aufnehmen, als hierzu quer angreifende Kräfte, bei denen der Tragarm als Hebelarm wirkt und die Fixierung des Tragarmes erheblich belastet wird

Die Erfindung läßt verschiedene Ausführungsformen zu. Zur weiteren Verdeutlichung ihres Grundprinzips sind mehrere davon in der Zeichnung dargestellt und werden nachfolgend beschrieben. Diese zeigt in einer Prinzipdarstellung:
- Figur 1: eine geschnittene Seitenansicht eines erfindungsgemäßen Kraftstoffbehälters,
- Figur 2: eine andere Ausführungsform eines Kraftstoffbehälters mit einer Schwallwand in einer geschnittenen Seitenansicht,
- Figur 3: einen Ausschnitt eines Kraftstoffbehälters mit einem Tragarm in einer geschnittenen Seitenansicht,
- Figur 4: eine Clips-Verbindung.

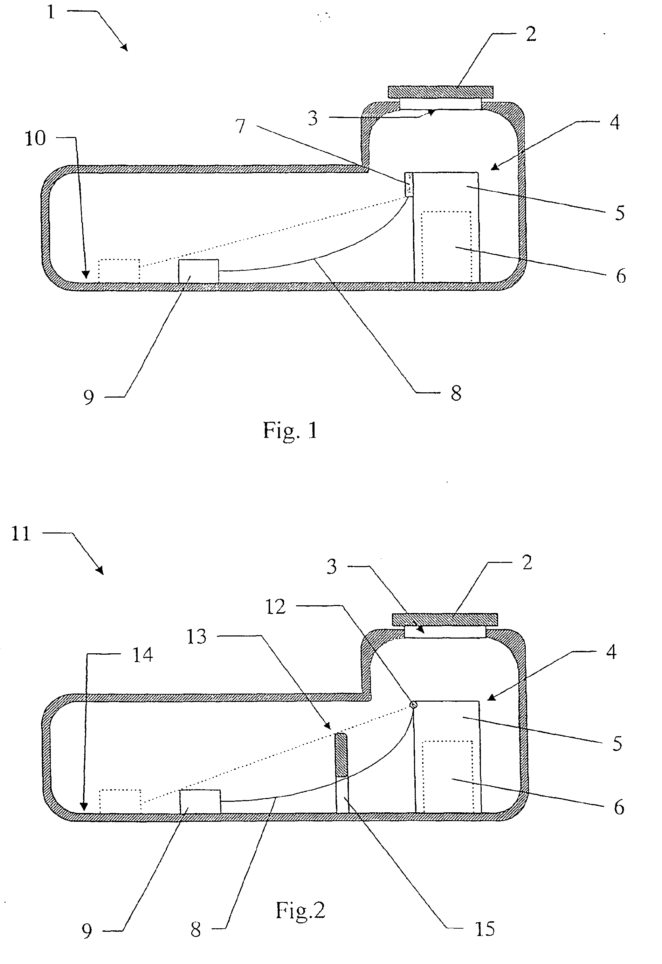

Figur 1 zeigt einen erfindungsgemäßen Kraftstoffbehälter 1 in einer teilweise geschnitten dargestellten Seitenansicht. Der Kraftstoffbehälter 1 besitzt eine mittels eines Deckels 2 verschlossene Öffnung 3, durch die eine Kraftstoffördereinheit 4 in den Innenraum des Kraftstoffbehälters 1 einsetzbar ist. Die Kraftstoffördereinheit 4 umfaßt einen Schwalltopf 5 mit einer darin eingesetzten und lediglich gestrichelt dargestellten Kraftstoffpumpe 6. Die Kraftstoffördereinheit 4 trägt eine außenseitig an dem Schwalltopf 5 angeordnete Haltevorrichtung 7, in der ein biegeelastischer Tragarm 8 eingespannt ist. Mittels des Tragarmes 8 ist eine Saugstrahlpumpe 9 aus einer lediglich gestrichelt dargestellten, entspannten Position gegen eine Innenwand 10 des Kraftstoffbehälters 1 vorgespannt, so daß der Tragarm 8 durchgebogen ist. Durch die biegeelastische Ausführung des Tragarmes 8 ist es möglich, die Kraftstoffördereinheit 4 außerhalb des Kraftstoffbehälters 1 mit dem Tragarm 8 zu verbinden und komplett in den Kraftstoffbehälter 1 einzusetzen. Die Fixierung der Kraftstoffördereinheit 4 im Inneren des Kraftstoffbehälters 1 bewirkt dabei zugleich das Vorspannen des Tragarmes 8, wodurch die Saugstrahlpumpe 9 gegen die Innenwand 10 gepreßt wird. Zur besseren Übersichtlichkeit sind die mit der Saugstrahlpumpe 9 verbundenen Anschlußelemente nicht dargestellt.

Figur 2 zeigt eine gegenüber dem in der Figur 1 dargestellten Kraftstoffbehälter 1 abgewandelte Ausführungsform eines Kraftstoffbehälters 11 in einer teilweise geschnittenen Seitenansicht. Die im Wesentlichen unveränderte Kraftstoffördereinheit 4 trägt hierbei außenseitig eine gelenkig ausgeführte Haltevorrichtung 12. Der die Saugstrahlpumpe 9 halternde Tragarm 8 ist hierbei mittels eines als Schwallwand ausgeführten Fixiermittels 13 gegen eine Innenwand 14 des Kraftstoffbehälters 11 vorgespannt. Das Fixiermittel 13 besitzt hierzu eine nach unten offene Ausnehmung 15, so daß das Fixiermittel 13 auf den zunächst entspannt eingeführten Tragarm 8 aufsetzbar ist und diesen vorspannt. Bei dieser Ausführungsform entsteht die erforderliche Spannung des Tragarmes 8 daher erst durch das Einsetzen des Fixiermittels 13. Das Einsetzen der Kraftstoffördereinheit 4 durch die mittels des Deckels 2 verschlossene Öffnung 3 und die Fixierung des Schwalltopfes 5 an der Innenwand 14 des Kraftstoffbehälters 11 wird dadurch erleichtert. Zur besseren Übersichtlichkeit wurde auch hierbei auf die Darstellung von Anschlußelementen verzichtet.

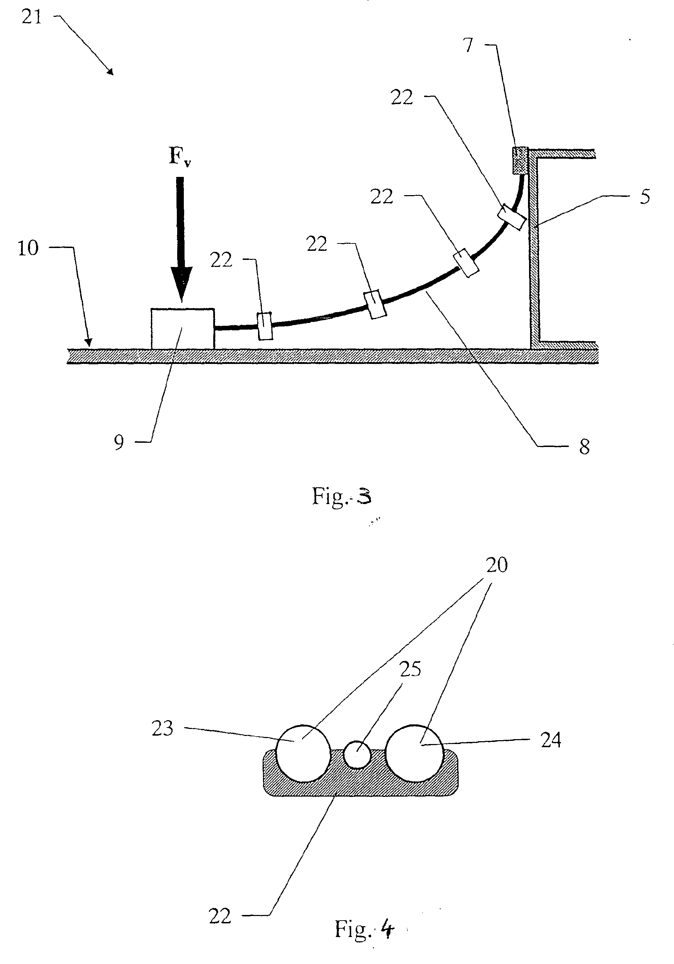

Figur 3 zeigt einen Ausschnitt eines lediglich abschnittsweise dargestellten Kraftstoffbehälters 21 in einer an Figur 1 angenäherten Ausführungsform. Diese Darstellung dient der Verdeutlichung des Prinzips und ist daher gleichermaßen auch auf die in den Figuren 2 und 3 gezeigten Ausführungsformen übertragbar. Die an dem biegeelastischen Tragarm 8 angeordnete Saugstrahlpumpe 9 ist hierbei mittels des an dem Schwalltopf 5 angeordneten Halteflansches 7 mit einer Vorspannkraft Fᵥ gegen die abschnittsweise dargestellte Innenwand 10 vorgespannt. Der Tragarm 8 weist hierbei vier in etwa gleichmäßig beabstandete Clips-Verbindungen 22 auf, welche eine nicht dargestellte Förderleitung mit dem Tragarm 8 verbinden.

In Figur 4 ist eine derartige Clips-Verbindung 22 in der Vorderansicht zu erkennen. Die Clips-Verbindung 22 trägt hierbei die Förderleitung 20, welche bei diesem Ausführungsbeispiel aus einer Treibstromleitung 23, welche den beispielsweise von der Brennkraftmaschine des Fahrzeuges zurücklaufenden Kraftstoffstrom zu der Saugstrahlpumpe leitet und einer Summenstromleitung 24 besteht, welche mit dem nicht dargestellten Schwalltopf verbunden ist. Mittels der Clips-Verbindung 22 sind die Treibstromleitung 23 und die Summenstromleitung 24 mit einem als Draht ausgeführten Tragarm 25 verbunden.

## Patentansprüche

1. Kraftstoffbehälter mit einer Saugstrahlpumpe, welche an einer Innenwand des Kraftstoffbehälters angeordnet, mit einer Kraftstofffördereinheit verbunden ist und mittels eines biegeelastischen Tragarmes gegen die Innenwand des Kraftstoffbehälters vorgespannt ist, **dadurch gekennzeichnet, dass** der Tragarm (8, 25) an der Kraftstofffördereinheit (4) fixiert ist.

2. Kraftstoffbehälter nach Anspruch 1, **dadurch gekennzeichnet, daß** der Tragarm (17) an einem durch die Öffnung (3) für die Kraftstoffördereinheit (4) zugänglichen Abschnitt der Innenwand (14) des Kraftstoffbehälters (11) fixiert ist.

3. Kraftstoffbehälter nach zumindest einem der vorhergehenden Ansprüche, **dadurch gekennzeichnet, daß** der Tragarm (8) mittels eines Fixiermittels (13) vorgespannt ist.

4. Kraftstoffbehälter nach zumindest einem der vorhergehenden Ansprüche, **dadurch gekennzeichnet, daß** das Fixiermittel (13) eine Schwallwand ist.

5. Kraftstoffbehälter nach zumindest einem der vorhergehenden Ansprüche, **dadurch gekennzeichnet, daß** eine Förderleitung (20) mit dem Tragarm (25) verbunden ist.

6. Kraftstoffbehälter nach Anspruch 5, **dadurch gekennzeichnet, daß** die Förderleitung (20) eine Summenstromleitung (24) und eine Treibstromleitung (23) hat.

7. Kraftstoffbehälter nach zumindest einem der vorhergehenden Ansprüche, **dadurch gekennzeichnet, daß** der Tragarm (8, 17, 25) einen biegeelastischen Draht hat.

8. Kraftstoffbehälter nach zumindest einem der vorhergehenden Ansprüche, **dadurch gekennzeichnet, daß** die Förderleitung (20) mittels einer Clips-Verbindung (22) mit dem Tragarm (25) verbunden ist.

9. Kraftstoffbehälter nach zumindest einem der vorhergehenden Ansprüche, **dadurch gekennzeichnet, daß** der Tragarm (8, 17) als biegeelastische Förderleitung ausgeführt ist.

10. Kraftstoffbehälter nach zumindest einem der vorhergehenden Ansprüche, **dadurch gekennzeichnet, daß** der Tragarm (8, 17, 25) im Wesentlichen parallel zu einer Fahrzeuglängsachse ausgerichtet ist.

## Claims

1. Fuel tank with an ejector pump, which is arranged on an inner wall of the fuel tank, is connected to a fuel feed unit and is preloaded against the inner wall of the fuel tank by means of a flexurally elastic supporting arm, **characterized in that** the supporting arm (8, 25) is fixed on the fuel feed unit (4).

2. Fuel tank according to Claim 1, **characterized in that** the supporting arm (17) is fixed on a section of the inner wall (14) of the fuel tank (11) which is accessible through the opening (3) for the fuel feed unit (4).

3. Fuel tank according to at least one of the preceding claims, **characterized in that** the supporting arm (8) is preloaded by means of a fixing means (13).

4. Fuel tank according to at least one of the preceding claims, **characterized in that** the fixing means (13) is a baffle.

5. Fuel tank according to at least one of the preceding claims, **characterized in that** a feed line (20) is connected to the supporting arm (25).

6. Fuel tank according to Claim 5, **characterized in that** the feed line (20) has a combined-flow line (24) and a propellant flow line (23).

7. Fuel tank according to at least one of the preceding claims, **characterized in that** the supporting arm (8, 17, 25) has a flexurally elastic wire.

8. Fuel tank according to at least one of the preceding claims, **characterized in that** the feed line (20) is connected to the supporting arm (25) by means of a clip connection (22).

9. Fuel tank according to at least one of the preceding claims, **characterized in that** the supporting arm (8, 17) is embodied as a flexurally elastic feed line.

10. Fuel tank according to at least one of the preceding claims, **characterized in that** the supporting arm (8, 17, 25) is aligned essentially parallel to a longitudinal axis of the vehicle.

## Revendications

1. Réservoir à carburant comportant une pompe à jet aspirant, qui est disposée sur une paroi intérieure du réservoir à carburant et est reliée à une unité de transport de carburant et qui est soumise, au moyen d'une béquille de retenue flexible, à une force de précontrainte contre la paroi intérieure du réservoir à carburant, **caractérisé par le fait que** la béquille de retenue (8, 25) est fixée sur l'unité de transport de carburant (4).

2. Réservoir à carburant selon la revendication 1 **caractérisé par le fait que** la béquille de retenue (17) est maintenue sur une partie de la paroi intérieure (14) du réservoir à carburant (11) accessible à travers l'ouverture (3) prévue pour l'unité de transport de carburant (4).

3. Réservoir à carburant selon au moins l'une des revendications précédentes **caractérisé par le fait que** la béquille de retenue (8) est soumise à une force de précontrainte par un moyen de fixation (13).

4. Réservoir à carburant selon au moins l'une des revendications précédentes **caractérisé par le fait que** le moyen de fixation (13) est une cloison brise-gerbe.

5. Réservoir à carburant selon au moins l'une des revendications précédentes **caractérisé par le fait qu'**une conduite d'alimentation (20) est liée à la béquille de retenue (25).

6. Réservoir à carburant selon la revendication 5 **caractérisé par le fait que** la conduite d'alimentation (20) comporte une conduite de flux total (24) et une conduite de flux moteur (23).

7. Réservoir à carburant selon au moins l'une des revendications précédentes **caractérisé par le fait que** la béquille de retenue (8, 17, 25) a un fil métallique flexible.

8. Réservoir à carburant selon au moins l'une des revendications précédentes **caractérisé par le fait que** la conduite d'alimentation (20) est liée à la béquille de retenue (25) au moyen d'une liaison à agrafes (22).

9. Réservoir à carburant selon au moins l'une des revendications précédentes **caractérisé par le fait que** la béquille de retenue (8, 17) est réalisée en tant que conduite d'alimentation flexible.

10. Réservoir à carburant selon au moins l'une des revendications précédentes **caractérisé par le fait que** la béquille de retenue (8, 17, 25) est orientée, pour l'essentiel, parallèlement à un axe longitudinal du véhicule.
